# EUROPEAN PATENT SPECIFICATION

(11) **EP 1 699 744 B1**
(45) Date of publication and mention of the grant of the patent: **14.11.2007**
(21) Application number: 05704891.0
(22) Date of filing: 03.01.2005
(51) Int. Cl.: C03C 17/22, C03C 17/34, C03C 17/36

(54) **CARBON BASED SOIL RESISTANT COATINGS FOR GLASS SURFACES**
AUF KOHLENSTOFF BASIERENDE SCHMUTZABWEISENDE ÜBERZÜGE FÜR GLASOBERFLÄCHEN
REVETEMENTS POUR SURFACES VITREES, RESISTANT AUX SALISSURES A BASE DE CARBONE

(30) Priority: 02.01.2004 US 751335
(43) Date of publication of application: 13.09.2006
(73) Proprietor: Cardinal CG Company, Eden Prairie, Minnesota 55344 (US)
(72) Inventor: KRISKO, Annette, J., Sauk City, WI 53583 (US); BOND, Robert, B., Spring Green, WI 53588 (US); STANEK, Roger, P., Spring Green, WI 53588 (US); PFAFF, Gary, L., Cazenovia, WI 53924 (US)
(74) Representative: Howe, Steven
(86) International application number: PCT/US2005/000043
(87) International publication number: WO 2005/068387

(56) References cited:
- EP-A- 0 593 988
- WO-A-01/90016
- US-A- 4 060 660
- PATENT ABSTRACTS OF JAPAN vol. 1997, no. 07, 31 July 1997 (1997-07-31) & JP 09 086943 A (TOSHIBA CERAMICS CO LTD), 31 March 1997 (1997-03-31)

## Description

### FIELD OF THE INVENTION

The p resent invention provides a coating for glass substrates and the like which resists accumulation of dirt and water stains. Coated glass substrates of the invention can be used in insulated glass units wherein the coating of the invention is carried on an exterior surface of one pane of glass while a reflective coating is applied on the opposite side of the same pane of glass.

### BACKGROUND OF THE INVENTION

Keeping windows and other glass surfaces clean is a relatively expensive, time-consuming process. While cleaning any individual window is not terribly troublesome, keeping a larger number of windows clean can be a significant burden. For example, with modem glass office towers, it takes significant time and expense to have window washers regularly clean the exterior surfaces of the windows.

Windows and other glass surfaces can become "dirty" or "soiled" in a variety of ways. Two of the primary manners in which windows can collect dirt involve the action of water on the glass surface. First, the water itself can deposit or collect dirt, minerals or the like onto the surface of the glass. Obviously, dirty water landing on the glass will leave the entrained or dissolved dirt on the glass upon drying. Even if relatively clean water lands on the exterior surface of a window, each water droplet sitting on the window will tend to collect dust and other airborne particles as it dries. These particles and any other chemicals which become dissolved in the water will become more concentrated over time, leaving a characteristic spot or drying ring on the glass surface.

The second way in which water tends to give a window or other glass surface a soiled or less attractive appearance is tied to an attack on the glass surface itself. As a droplet of even relatively clean water sits on a glass surface, it will begin to leach alkaline components from the glass. For a typical soda lime glass, the soda and lime will be leached out of the glass, increasing the pH of the droplet. As the pH increases, the attack on the glass surface will become more aggressive. As a result, the glass which underlies a drying water droplet will become a little bit rougher by the time the water droplet completely dries. In addition, the alkaline components which were leached out of the glass will be redeposited on the glass surface as a drying ring. This dried alkaline material not only detracts from the appearance of the glass; it will also tend to go back into solution when the glass surface is wetted again, rapidly increasing the pH of the next water droplet to coalesce on the glass surface.

In storing and shipping plate glass, the presence of water on the surfaces between adjacent glass sheets is a chronic problem. One can take steps to shield the glass from direct contact with water. However, if the glass is stored in a humid environment, water can condense on the glass surface from the atmosphere.

This becomes more problematic when larger stacks of glass are collected. Large stacks of glass have a fairly large thermal mass and will take a long time to warm up. As a consequence, they will often be cooler than the ambient air when ambient temperature increases (e.g., in the morning), causing moisture in the air to condense on the surface of the glass. Due to limited air circulation, any moisture which does condense between the sheets of glass will take quite a while to dry. This gives the condensed moisture a chance to leach the alkaline components out of the glass and adversely affect the glass surface. The rate of attack can be slowed down somewhat by applying an acid to the surface of the glass. This is commonly done by including a mild acid, e.g., adipic acid, in the separating agent used to keep glass sheets from sticking to and scratching one another.

A number of attempts have been made to enable a glass sheet to keep a clean appearance longer. O ne avenue of current investigation is a "self-cleaning" surface for glass and other ceramics. Research in this area is founded on the ability of certain metal oxides to absorb ultraviolet light and photocatalytically break down biological materials such as oil, plant matter, fats and greases, etc. The most powerful of these photocatalytic metal oxides appears to be titanium dioxide, though other metal oxides which appear to have this photocatalytic effect include oxides of iron, silver, copper, tungsten, aluminum, zinc, strontium, palladium, gold, platinum, nickel and cobalt.

While such photocatalytic coatings may have some benefit in removing materials of biological origin, their direct impact on other materials is unclear and appears to vary with exposure to ultraviolet light. As a consequence, the above-noted problems associated with water on the surface of such coated glasses would not be directly addressed by such photocatalytic coatings.

A number of attempts have been made to minimize the effect of water on glass surfaces by causing the water to bead into small droplets. For example, U.S. Patent 5,424,130 suggests coating a glass surface with a silica-based coating which incorporates fluoroalkyl groups. The reference teaches applying a silicone alkoxide paint onto the surface of the glass, drying the paint and then burning the dried paint in air. Nakanishi, et al. stress the importance of substituting part of the non-metalic atoms, i.e., oxygen in a layer of SiO₂, with a fluoroalkyl group. Up to 1.5% of the oxygen atoms should be so substituted. Nakanishi, et al. state that if less than 0.1% of the oxygen atoms are substituted with a fluoroalkyl group, the glass won't repel water properly because the contact angle of water on the glass surface will be less than 80°.

Such "water repellent" coatings do tend to cause water on the surface of the glass to bead up. If the coating is applied to an automobile windshield or the like where a constant flow of high velocity air is blowing over the surface, this water beading effect can help remove water from the glass surface by allowing the droplets to blow off the surface. However, in more quiescent applications, these droplets will tend to sit on the surface of the glass and slowly evaporate. As a consequence, this supposed "water repellent" coating will not solve the water-related staining problems noted above. To the contrary, by causing the water to bead up more readily, it may actually exacerbate the problem.

### SUMMARY OF INVENTION

According to the present invention, a coated glass article is provided having an exterior face exposed to periodic contact with water and an inner face, the exterior face bearing an external water-sheeting coating thereon, the coating being formed of a graphite carbon layer having a thickness of 50-100 angstroms, the coating being sputtered directly onto the exterior face of the article, or being formed onto a transparent base layer applied directly onto the exterior face of the article, the coating reducing the contact angle of water on the coated exterior face to below about 25 degrees and causing water applied to the coated exterior to sheet.

In one further embodiment the sheet of glass has an interior surface bearing a reflective coating thereon. The reflective coating may comprise a reflective metal layer and at least one dielectric layer.

A method of rendering a glass surface resistant to soiling and staining may include first providing a sheet of glass having an interior surface and an exterior surface. The interior and exterior surfaces of the glass are cleaned. Thereafter, the interior surface of the sheet of glass is coated with a reflective coating by sputtering, in sequence, at least one first dielectric layer, at least one metal layer, and at least one second dielectric layer. The exterior surface of the glass is coated with a water-sheeting coating by sputtering carbon directly onto the exterior surface of the sheet of glass. If so desired, the water-sheeting coating can be applied on the same sputter coating apparatus used to create the reflective coating. With appropriate material selection, the water-sheeting coating and one of the dielectric layers of the reflective coating may even be applied in the same sputtering chamber in a non-oxidizing atmosphere. If so desired, the pane of glass can be coated on both the interior surface and the exterior surface while maintaining the glass in a constant orientation wherein the interior surface is positioned above the exterior surface.

A sputtering line may be provided, the sputtering line comprising a series of sputtering chambers, each having a support for a sheet of glass therein. At least one of the sputtering chambers comprises a dual direction sputtering chamber having an upper target position above the support and a lower target position below the support. The interior and exterior surface of the glass are cleaned and, thereafter, the sheet of glass is positioned on the support in the dual direction supporting chamber such that the interior surface is oriented toward the upper target and the exterior surface is oriented toward the lower target. The upper target is sputtered to deposit a dielectric layer. This dielectric layer may be deposited directly on the interior surface of the glass or on a film stack layer previously deposited on the interior surface of the glass. While the sheet of glass remains in the dual direction sputtering chamber, the lower target is sputtered to deposit a water-sheeting coating on the exterior surface of the glass. In one possible preferred embodiment, both the upper target and the lower target are sputtered in a non-oxidizing atmosphere within the same sputtering chamber.

### BRIEF DESCRIPTION OF THE DRAWINGS

Figure 1 is a schematic cross-sectional view of a sheet of glass bearing a coating in accordance with one embodiment of the invention;
Figure 1A is a schematic cross-sectional view of a sheet of glass bearing a coating that includes a transparent base layer in accordance with one embodiment of the invention;
Figure 2 is a schematic cross-sectional illustration of a multi-pane insulated glass unit incorporating a water-sheeting coating of the invention.
Figure 3 is a schematic cross-sectional view of a laminated window structure of the type commonly used in automobile windshields bearing a water-sheeting coating of the invention;
Figure 4 is a schematic illustration of a dual direction sputtering chamber for use in producing an article in accordance with the invention; and
Figure 5 is a schematic illustration of a multiple-zone dual direction sputtering chamber for use in producing an article in accordance with another embodiment of the invention.

### DETAILED DESCRIPTION OF THE PREFERRED EMBODIMENTS

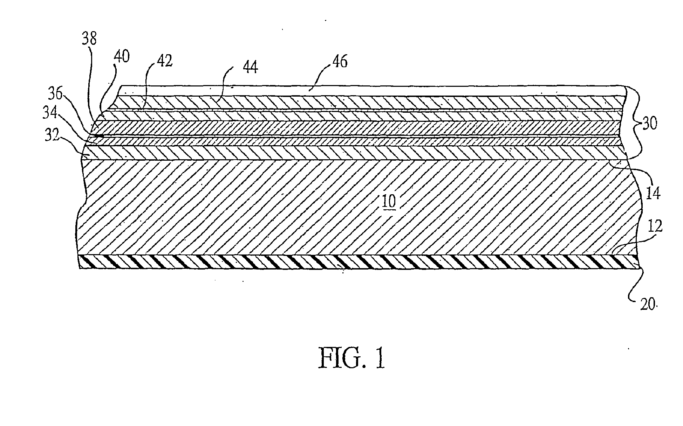

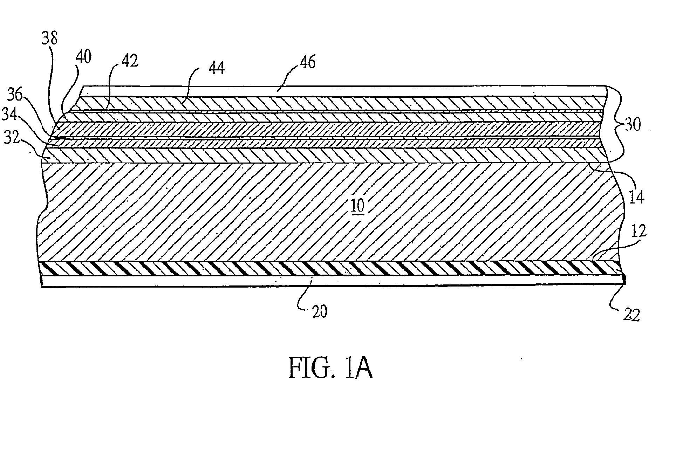

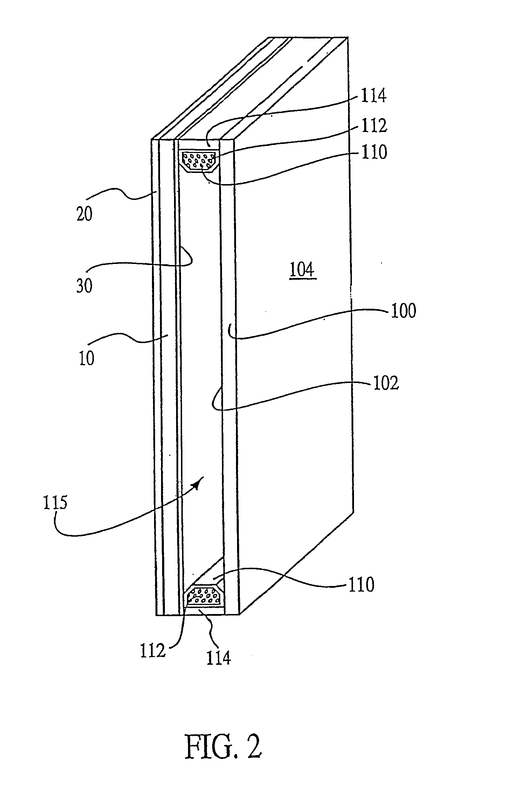

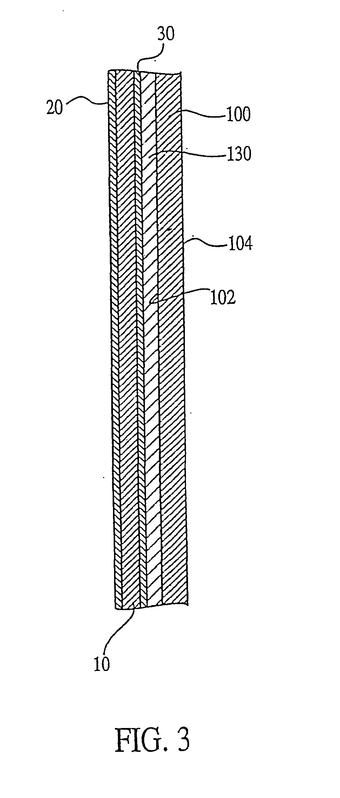

Figure 1 schematically illustrates a sheet of glass bearing a pair of coatings in accordance with one useful embodiment of the invention. The sheet of glass 10 includes an exterior face 12 and an interior face 14. (The designation of "interior" and "exterior" face in the ensuing discussion is somewhat arbitrary. It is assumed, though, that in most circumstances the exterior face will be exposed to an ambient environment wherein it may come into contact with dirt, water and the like. The interior face may also be oriented toward the same kind of ambient environment In the embodiments illustrated in Figures 2 and 3, though, this "interior" face is actually protected and a second pane of glass stands between this interior face and the ambient environment.)

A variety of substrates are suitable for use in the present invention. In most cases, the substrate is sheet like (e.g., having two generally-opposed major surfaces). For example, the substrate can be a sheet of transparent material (i.e., a transparent sheet). For example, opaque substrates may be useful in some cases. However, it is anticipated that for most applications, the substrate will comprise a transparent or translucent material, such as glass or clear plastic. In many cases, the substrate will be a glass pane. Glass substrates 10 suitable for use in connection with the present invention include any of the conventional glass substrates known in the art for the preparation of coated glass articles. A typical glass substrate used in the manufacture of vehicle windows and plate glass is commonly referred to as soda-lime-silica glass. Other suitable glasses may be generally designated as alkali-lime-silica glass, boro-silicate glass, alumino-silicate glass, boro-alumino silicate glass, phosphate glass, fused silica, etc., as well as combinations thereof. A preferred glass sheet 10 is formed of soda-lime-silica glass.

Substrates of various size can be used in the present invention. Commonly, large-area substrates are used. Certain embodiments involve a substrate having a width of at least about. 5 meter, preferably at least about 1 meter, perhaps more preferably at least about 1.5 meters (e.g., between about 2 meters and about 4 meters), and in some cases at least about 3 meters.

Substrates of various thickness can be used in the present invention. Commonly, substrates (e.g., glass sheets) with a thickness of about 1-5 mm are used. Certain embodiments involve a substrate with a thickness of between about 2.3 m m and about 4.8mm, and perhaps more preferably between about 2.5 mm and about 4.8mm. In some cases, a sheet of glass (e.g., soda-lime glass) with a thickness of about 3 mm will be used.

The interior face 14 of the glass 10 bears a reflective coating 30. As those skilled in the art will readily recognize, this reflective coating may take any desired form depending on the desired properties. A wide variety of such films are known in the art and the precise nature of the reflective coating 30 is beyond the scope of the present invention.

If, for example, the glass article is to be used as a mirror, the coating 30 may simply comprise a relative thick layer of a reflective metal. If so desired, a protective coating of a dielectric material may be applied over the surface of the metal opposite the surfacing contact with the glass. As is known in the art, this will help protect the metal layer from chemical and physical attack. One could also employ any of a variety of mirror coatings known in the art which comprise a layer of a dielectric on either side of a reflective metal layer; many dichroic mirrors known in the art employ such a structure.

In the embodiment of Figure 1, the reflective coating 30 is typified as an infrared reflective coating of the type commonly used in low emissivity solar control films. Typically, such films will comprise a metal layer sandwiched between a pair of dielectric layers. This structure may be repeated to further enhance the infra-reflective properties of the film stack. One example of a useful infrared reflective film stack is disclosed in U.S. Patent 5,302,449 (Eby, et al.).

The illustrative film stack 30 of Figure 1 includes a base coat 32 which may comprise one or more layers of dielectric materials. For example, this base coat 32 may comprise zinc oxide applied at a thickness of about 150-275 Å. A first metal layer 34 may be applied directly on top of this base coat 32. This metal may be, for example, silver applied at a thickness of between about 100 Å and about 150 Å. A second dielectric layer 38 may be applied over the first metal layer 34. The thickness of this dielectric layer 38 will depend, at least in part, on whether a second metal layer 40 will be included in the film stack. In a film stack having two metal layers, as shown, this second dielectric layer 38 may typically comprise a relatively thick layer of a metal oxide, such as 700-750 Å of zinc oxide. If so desired, a relatively thin sacrificial layer 36 may be applied between the metal layer 34 and the dielectric layer 38. This will help protect the metal layer 34 during the sputter deposition of the dielectric layer 38. The sacrificial layer 36 may, for example, comprise a layer of titanium metal applied at a thickness of 25 Å or less. This titanium metal will oxidize sacrificially during the application of a metal oxide dielectric 38, limiting any damage to underlying silver layer 34.

In the illustrated film stack, a second metal layer 4 0 is applied o ver the second dielectric layer 38. The second metal layer 40 will usually be made of the same material as is the first metal layer 34. For example, this second metal layer 40 may comprise about 125-175 Å of silver. Again, a sacrificial layer 42 of titanium or the like may be applied over the metal layer 40 to protect the metal layer during subsequent deposition of the overlying dielectrics 44 and 46. A third dielectric layer 44 is applied over the sacrificial layer 42. This dielectric layer 44 can also be a metal oxide, e.g., zinc oxide applied at about 250-300 Å. If so desired, a protective overcoat 46 of another dielectric material can be applied over the dielectric layer 44. In one preferred embodiment, this overcoat 46 may comprise a 50-60 Å layer of Si₃N₄.

The water-sheeting coating 20 of the invention desirably comprises carbon deposited directly on the exterior surface 12 of the glass 10. While a highly detailed surface analysis has not been conducted, the surface of the carbon coating is believed to be relatively hard and smooth. Due to a lack of detailed analysis, the exact thicknesses of the carbon coatings which have shown substantial functional improvement are not known. From reported information regarding carbon sputtering rates and the known power and glass speeds used in making these coatings, it is possible to make an educated estimate of these thicknesses and form a belief regarding the thicknesses which should perform well. The coating 20 should have a thickness of between about 50 Å and about 100 Å. One preferred manner in which this coating 20 may be applied to the exterior surface 12 of the glass 10 will be discussed in more detail below.

Another embodiment of the present invention also provides exterior surface water-sheeting coatings having a transparent base layer, as shown in Figure 1A. The transparent base layer 22 is anticipated to have particular utility for heat-treatable low-emissivity coatings. For example, the administration of a transparent base layer 22 to the exterior glass surface 12 has been found to smooth me roughness of the surface and reduce or eliminate nano-cracks, thereby enhancing the adherence of a water sheeting coatings 20 to the substrate 10. Furthermore, it has been found that the administration of a transparent base layer 22 to the substrate 10 prior to administration of the water sheeting coating 20 also seals the substrate and inhibits the potential of sodium corrosion of the coating.

In certain embodiments, the transparent base layer 22 does not have a substantial direct impact on the optical function of the film layers applied thereover. That is, the presence of the base layer 22 itself in the final coated product does not have a substantial impact on the optical properties of the coated product. However, the base layer 22 does impart resistance to deterioration (e.g., adverse change in optical properties) of the film stacks into which it is incorporated. Thus, the base layer 22 can be formed of material having an index of refraction that approximates that of the substrate to which it is applied. Preferably, the base layer is comprised of material with a refractive index that is equal to, or substantially the same as, that of the underlying substrate. In many cases, the substrate will be formed of material having an index of refraction of between about 1.35 and about 1.65, perhaps most often between about 1.4 and about 1.55. In these cases, the base layer may be formed of material with a refractive index of less than about 1.7, preferably less than 1.55 and more preferably less than about 1.65. However, it is more preferable in these cases to form the base layer of material with a refractive index of between about 1.35 and about 1.65, or perhaps between about 1.4 and about 1.55.

In certain embodiments of the invention, the base layer 22 is an amorphous film. In many cases, it is believed to be advantageous to form the base layer 22 of film that is as amorphous as possible. For example, a base layer 22 of silicon dioxide is particularly preferred. An amorphous base layer 22 of this nature can be deposited advantageously by sputtering, as described below. While a substantially amorphous film (e.g., silicon nitride) may be used in some embodiments, the base layer 22 preferably is a substantially non-crystalline film. While silicon dioxide is described in detail as one preferred amorphous material, those skilled in the art may wish to select other amorphous materials to use as the base layer 22.

As noted above, the base layer comprises silicon dioxide in certain preferred embodiments of the invention. Silicon dioxide typically has a refractive index of about 1.4. Of course, other materials having a refractive index of between about 1.35-1.65, or more preferably between about 1.4-1.55, could be used as well. For example, those skilled in the art may select other materials with suitable refractive indexes. However, regardless of the material selected, the base layer 22 is preferably formed of substantially non-porous material. Moreover, the base layer 22 is preferably formed of material that adheres well to the desired substrate.

The present base layer 22 is perhaps most advantageous when used in conjunction with a substrate that is vulnerable to being corroded (e.g., by exposure to moisture). For example, the substrate may be a glass pane. A variety of glass types can be used, although soda lime glass is perhaps the most preferred. Soda lime glass typically has a refractive index of between about 1.4 and about 1.55.

The base layer 22 is preferably deposited directly upon a surface 12 of the substrate 10. As noted above, it is anticipated that soda lime glass will be a preferred substrate for many applications. It is well known that soda lime glass is formed largely of silicon dioxide. Thus, in certain preferred embodiments, a base layer 22 of silicon dioxide is applied directly upon a sheet of soda lime glass. In embodiments of this nature, the resulting bond between the silicon dioxide and the glass is believed to be exceptionally strong. Accordingly, silicon dioxide is a particularly preferred base layer 22 material, as it is unlikely to delaminate from the substrate during subsequent processing or use.

The transparent base layer 22 desirably has a thickness of at least about 25 angstroms. For example, the base layer 22 may have a thickness of between about 25 angstroms and about 100 angstroms. Particularly good results have been achieved using silicon dioxide base layers at these thickness ranges. Since the refractive index of the transparent base layer is approximately the same as that of the substrate, the base layer can be incorporated into a film stack on the substrate at essentially any thickness without substantially changing the visible transmission, reflection, or color of the coated substrate. As a consequence, this layer 22 has no strict maximum thickness.

However, it is time and cost effective to minimize the thickness of the base layer. This is especially true in cases where the base layer 22 is formed of sputtered silicon dioxide (due to the slow sputter rate of silicon dioxide). Providing a thick sputtered silicon dioxide base layer would take an unacceptable amount of process time and would require either an unacceptably large number of sputtering chambers (i.e., an unacceptably long sputtering line) or an unacceptably slow substrate speed (which would have an unacceptable effect on throughput). Further, the stress in the base layer 22 will typically increase as the thickness of this layer 22 is increased. While this may be less important when the base layer 22 is formed of sputtered silicon dioxide (since sputtered silicon dioxide tends not to have particularly high stress), some advantage in the way of low stress may be gained by minimizing thickness. Surprisingly, good results have been achieved using a transparent base layer 22 with a thickness of less than 100 angstroms, and even with a thickness of less than about 90 angstroms (e.g., about 50-70 angstroms). Base layers 22 of silicon dioxide, for example, have given good results at these thicknesses.

In certain particularly advantageous embodiments, the transparent base layer 22 is a sputtered film. Sputtered films have exceptional smoothness and thickness uniformity. Both of these qualities are highly desirable for enhanced adherence of additional films sputtered over the base layer 22. In particular, the low surface roughness of a sputtered base layer 22 promotes particularly good thickness uniformity in the overlying films. Sputtered silicon dioxide base layers are particularly advantageously as they tend to have a very desirable amorphous structure. Sputtering techniques and equipment are well known in the art. For example, magnetron sputtering chambers and related equipment are commercially available from a variety of sources (e.g., Leybold and BOC Coating Technology). Useful magnetron sputtering techniques and equipment are also disclosed in U.S. Patent 4,166,018, issued to Chapin.

Conventional magnetron sputtering techniques and equipment can be used to apply the transparent base layer 22. As noted above, the base layer 22 can be formed advantageously of silicon dioxide. For example, this layer 22 could be deposited by sputtering silicon dioxide targets in an inert atmosphere. However, it can be extremely difficult to reliably sputter silicon dioxide targets. This is because targets serve as cathodes in conventional magnetron sputtering processes and because silicon dioxide is a poor conductor. As a result, it is preferable to deposit silicon dioxide using targets comprising metallic silicon rather than silicon dioxide. The material actually deposited on the substrate c an be converted to silicon dioxide by employing a sputtering atmosphere that includes oxygen.

The silicon targets are preferably not formed of pure silicon. Rather, the targets more preferably comprise a compound ofsilicon and aluminum or another electrically-conductive material. Pure silicon targets are difficult to sputter in a consistent, controlled fashion because silicon is a semiconductor. As a consequence, some of the silicon dioxide (which is non-conductive) that is emitted when sputtering pure silicon targets is redeposited on the target surfaces, as well as on the anodes and surrounding shields in the sputtering chamber. This can affect the flow of current, which in turn may cause arcing if sputtering is continued. Thus, to reduce arcing, it is preferred that the targets include between about 5% and about 15% aluminum, or another electrically conductive material. Silicon-aluminum targets are available from a number of well known commercial suppliers, such as Bekaert VDS nv, which is located in Deinze, Belgium.

The atmosphere in the sputtering chamber can be varied to achieve an optimized sputtering rate. An oxidizing sputtering atmosphere is preferably employed in cases where silicon or silicon-aluminum targets are used. Of course, the sputtering atmosphere need not be pure oxygen in these cases. To the contrary, a mixture of oxygen and inert gas (e.g., argon) will tend to enhance the sputtering rate. For example, it is believed that a sputtering atmosphere comprising oxygen and up to about 40% argon (preferably 0-20% argon) maintained at about 3 x 10⁻³ mbar will suffice. The power applied to each target is preferably optimized to reduce arcing yet maximize sputtering rate. Power levels of up to about 80 kW per target are expected to yield good results.

One manufacturing arrangement that has given good results employs three rotary sputtering targets of silicon doped with about 5-15% aluminum (i.e., between about 95% silicon/about 5% aluminum and about 85% silicon/about 15% aluminum) with a power of about 42 kW applied to each target. The atmosphere in the sputtering chamber may comprise 100% O₂ at a pressure of about 2.5-4.5 m Torr. Alternatively, an atmosphere comprising about 80% oxygen and about 20% argon maintained at about 3 x 10⁻³ mbar can be used. The substrate can be moved past the sputtering targets at about 2.54 - 12.7 m/min (100-500 inches per minute). Of course, the precise operating conditions (e.g., substrate speed, power, plasma composition, target composition, etc.) under which a silicon dioxide base layer 22 may be applied can be varied as desired to optimize deposition of this layer 22 at different thicknesses. Given the present teaching as a guide, one of ordinary skill in the art would be able to readily select and vary suitable operating conditions to apply a silicon dioxide base layer at different thicknesses.

Thus, in a method to produce one embodiment of the invention, a silicon dioxide base layer 22 is deposited by moving a glass substrate 10 beneath a plurality of silicon-aluminum targets while sputtering the targets in an oxidizing atmosphere. If so desired, this atmosphere may consist essentially of oxygen and inert gas. While this is by no means a requirement, sputtering atmospheres of this nature have given good results. A base layer 22 deposited by such a method would be expected to consist essentially of silicon dioxide and a small amount of aluminum (or another metal provided in the targets to enhance their conductivity), at least when initially deposited. Next, the water sheeting coating 20 is deposited by moving a glass substrate 10 beneath a plurality of graphite targets while sputtering the targets in an inert atmosphere, such as argon. Figure 1A depicts a particularly preferred coating of the invention.

In the film stack depicted in Figure 1A, the transparent base layer 22 is formed directly upon the glass substrate 10. Upon the base layer 22 is deposited a second layer 20, which may include one or more graphite carbon films.

Figure 2 is a schematic illustration of a multi-pane insulated glass unit in accordance with a further embodiment of the invention. Insulated glass units are well known in the art and need not be discussed in any significant detail here. Briefly, though, such an insulated glass unit would generally comprise two panes of glass 10,100 held in a spaced-apart relationship by a spacer 110. In this embodiment, the water-sheeting coating 20 carried by the exterior surface of the glass 10 is oriented away from the second pane of glass 100 while the reflective coating 30 carried by the interior face of the glass 10 is s oriented toward the second pane of glass 100. The spacer 110 is bonded on one side to the interior surface 102 of the second glass pane 100 and on the other side to the first glass pane 10. As is known in the art, the spacer may be bonded directly to the interior surface 14 of the glass 10 or the reflective coating 30 may extend out to the margins of the glass 10 and the spacer may be attached directly to that coating 30.

Typically, the spacer will be formed of metal or the like and will have a desiccant 112 retained therein. This desiccant will be allowed to communicate with the gas in the interpane space 115 to remove any moisture which may seep between the panes of glass. An exterior seal 114 may be carried around the external periphery of the spacer 110 to form a reliable gas and moisture barrier.

In a modification of the structure shown in Figure 2, a water-sheeting coating (not shown) is substantially the same as that described above for the coating 20 of Figure 1 can be applied on the exterior surface 104 of the second glass pane 100. This coating may be employed either instead of or in addition to the coating 20 illustrated on the exterior surface of the first pane 10. Hence, in one embodiment (not shown), the exterior surface 12 of the first glass pane 10 bears a water-sheeting coating of the invention; the interior surface 14 of the first glass pane bears a multiple-layer infrared-reflective coating 30; the interior surface 102 of the second glass pane 100 bears no secondary coating; and the exterior surface 104 of the second glass pane bears a second water-sheeting coating substantially the same as the coating 20 on the exterior of the first pane.

Figure 3 illustrates another application for a coated glass article of the invention. In this embodiment, the glass sheet 10 is bonded to a second sheet of glass 100 by an intermediate tear-resistant plastic film 130 to form a laminated structure. Such laminated window structures are wellknown in the field of automobile windows. Typically, this plastic layer 130 will take the form of a relatively thick layer of polyvinylbutyral or the like which is heat-fused to the other two sheets of glass. If so desired, the coating 30 may be omitted. More preferably, though, the reflective film 30 will comprise a heat-temperable infrared reflective film. A variety of such films are known in the art and the precise nature of this film is beyond the scope of the present invention, but any suitable heat-temporable coating 30 may be used.

As noted above, the water-sheeting coating is desirably applied by sputtering, as is the reflective coating 30, if present. These separate coatings can be applied using conventional sputtering equipment by applying the two coatings in separate passes through a sputtering line. For example, before the reflective coating is applied, the water-sheeting coating 20 of the invention can be applied to the exterior surface of the glass by positioning this surface of the glass beneath a carbon-containing target in a non-oxidizing sputtering atmosphere. Thereafter, a multiple-layer reflective coating can be applied using a series of sputtering chambers in a conventional manner, with each chamber being adapted to sputter one or more specific layers of the desired film stack.

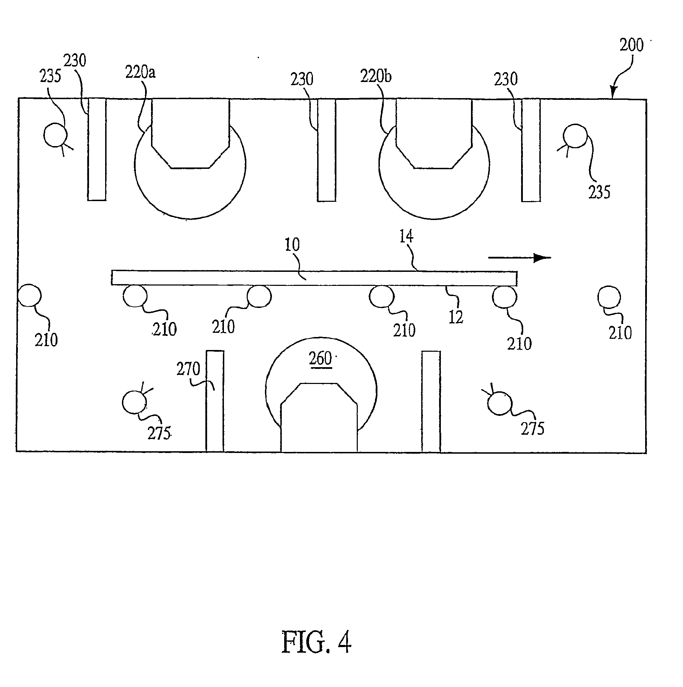

Figure 4 schematically illustrates a dual direction sputtering chamber. Magnetron sputtering chambers are well known in the art and are commercially available from a variety of sources. While a thorough discussion of such magnetron sputtering chambers is beyond the scope of the present disclosure, one relatively useful structure for such a device is disclosed in U.S. Patent 5,645,699 (Sieck).

Generally speaking, though, magnetron sputtering involves providing a target formed of a metal or dielectric which is to be deposited on the substrate. This target is provided with a negative charge and a relatively positively charged anode is positioned adjacent the target. By introducing a relatively small amount of a desired gas into the chamber adjacent the target, a plasma of that gas can be established. Atoms in this plasma will collide with the target, knocking the target material off of the target and sputtering it onto the substrate to be coated. It is also known in the art to include a magnet behind the target to help shape the plasma and focus the plasma in an area adjacent the surface of the target.

In Figure 4, the sheet of glass 10 to be coated is positioned on a plurality of support rollers 210 which are spaced along the length of the sputtering chamber 200. While the precise spacing of these rollers 210 can be varied, for reasons explained more fully below, it is desired that these rollers are spaced a little bit farther apart along at least a interim length of the chamber 200 to increase the effective coating area from the lower target 260.

In the illustrated embodiment, the sheet of glass 10 is oriented to travel horizontally across these rollers, e.g., from left to right. The interior surface 14 of the glass is oriented upwardly while the exterior surface 12 of the glass is oriented downwardly to rest on the rollers 210. (While this is probably the most typical configuration, it should be understood that the relative orientation of the glass within the sputtering chamber 200 can be switched so long as the relative positions of the upper targets 200 and the lower target 260 are also reversed. As a consequence, it should be noted that designating these targets as "upper" and "lower" targets is simply for purposes of convenience and the relative orientation of these elements within the sputtering chamber can easily be reversed if so desired.)

The s puttering c hamber 200 shown in Figure 4 includes two spaced-apart upper sputtering targets 220a and 220b. While these targets can be planar targets, they are illustrated as being so-called rotary or cylindrical targets. These targets are arranged generally parallel to one another with a plurality of anodes 230 extending horizontally and generally parallel to these targets. As suggested in U.S. Patent 5,645,699, an intermediate anode 230 may also be positioned between these two targets.

A gas distribution system is used to supply the sputtering gas to the chamber adjacent the targets 220a and 220b. While a variety of gas distribution systems are known in the art, this distribution system may simply comprise a pair of pipes 235 with a plurality of spaced-apart openings or nozzles oriented generally toward the target.

The use of multiple targets positioned above a glass substrate in a magnetron sputtering chamber is fairly conventional in the field. The unique aspect of the sputtering chamber 200 Figure 4, though, is the presence of the "lower" target 260. This target is the target used to sputter the water-sheeting coating 20 of the invention directly on the exterior surface 12 of the glass. As with the upper targets 220a and 220b, the lower target 260 is provided with at least one, and preferably two, anodes 270 in sufficient proximity to establish a stable plasma. The gas distribution pipes 235 shown adjacent the upper targets 220a and 220b are undesirably far from the lower target 260 and the intermittent presence of the glass 10 will effectively divide the sputtering chamber 200 into two separate functional areas. Accordingly, it is preferred to have separate gas distribution pipes 275 positioned beneath the gas adjacent the lower target 260 to ensure a consistent supply of gas for the plasma adjacent the target. If so desired, the lower pipes 275 and the upper pipes 235 may be a part of the same gas distribution system, i.e., both sets of pipes can be connected to a single gas supply.

The nature of the gas supplied by the lower pipes 275 will depend at least in part on the nature of the sputtering target 260. In conventional magnetron sputtering, the target must serve as a cathode. It is anticipated that in applying a water-sheeting coating 20 in accordance with the present invention, a graphite target will be sputtered in a non-oxidizing (and preferably anaerobic) atmosphere. Graphite is reasonably conductive and is relatively strong and stiff, giving it suitable mechanical properties to serve as a target material. Even so, it seems likely that in commercial production, the target will employ a metal backing carrying a graphite sputtering layer. Rotary targets for use in the invention may comprise a hollow metal backing tube (which may be formed of stainless steel) on which a layer of carbon has been deposited, e.g., by plasma spraying in a non-oxidizing (and preferable slightly reducing) atmosphere or by sintering graphite powder. The carbon layer is at times referred to herein as a "graphite" overcoat, but it should be understood that the carbon can take any other crystalline or amorphous form so long as it sputters properly to yield a suitable carbon-based water-sheeting coating 20 of the invention. However, the carbon-based water sheeting coating 20 preferably is comprised of non-hydrogenated graphite. Moreover, the carbon-based water sheeting coating is generally comprised of approximately greater than 70% graphite, preferably more than about 85% graphite and most preferably more than about 90% graphite. It is commonly known that graphite is generally comprised of carbon that predominately includes trigonal planar (sp²) carbon-carbon bonds. Such coatings are generally hydrophilic, thereby promoting the sheeting of water during water contact with the coating surface.

While the successive sheets of glass 10 will effectively divide the sputtering chamber, this does not preclude gas introduced in one area of the chamber from traveling elsewhere in the chamber. As it is preferred that the lower target 260 comprise a graphite target s puttered in a n on-oxidizing atmosphere, it is preferred that the sputtering of the upper targets 220a and 220b not require substantial oxygen in the sputtering plasma to deposit the desired coating composition. This may limit the utility of this dual direction sputtering chamber 200 into depositing a water-sheeting coating 20 on one side of the glass sheet and sputtering a metal target in a strongly oxidizing atmosphere to deposit a dielectric metal oxide on the other surface.

More advantageously, the dual direction sputtering chamber of Figure 4 can be used to deposit a dielectric layer on the interior surface 14 of the glass and the carbon-based water-sheeting coating 20 on the exterior surface 12 of the glass in a single chamber. The sputtered dielectric may be a metal oxide.

As suggested from some of the experimental examples set forth below, it is preferred that the carbon water-sheeting coating 20 of the invention be applied using a non-oxidizing atmosphere, preferably either argon or nitrogen. If so desired, the dual direction sputtering chamber of Figure 4 c an be used to apply a metal layer or a metal nitride on the interior surface 14 of the glass at the same time that the water-sheeting coating 20 is applied to the exterior surface 12 of the glass. Even if the gas delivered through the lower pipe 275 or pure argon and the gas introduced into the upper pipe 235 were pure nitrogen or a combination of argon and nitrogen, commingling of these two gasses should not substantially adversely affect the application of a metal nitride layer using the upper targets while simultaneously applying a carbon-based water-sheeting coating 20 using graphite targets. For example, one or both of the targets 220a and 220b may be made of silicon metal doped with up to 5% aluminum and the gas introduced through both sets of gas distribution pipes 235 and 275 may comprise an appropriately balanced mixture of argon and nitrogen or even pure nitrogen.

In conventional magnetron sputtering chambers, the spacing of the rollers 210 used to support the glass is kept fairly small to permit smaller glass substrates to be processed on the line without any significant risk of having the glass fall between the rollers. In order to minimize the interference of the rollers in applying the water-sheeting coating on the exterior surface 12 of the glass, though, this spacing may be increased. The maximum safe spacing will need to be determined on a case-by-case basis for a given range of anticipated glass sizes. However, the larger the spacing between the rollers disposed in the path from the lower target 260 to the exterior surface 12 of the glass, the greater the percentage of the sputtered carbon which will be deposited on the glass. Of course, the rollers in other areas of the sputtering apparatus can be maintained at their normal spacing. It may be desirable to make a few of the rollers in the dual direction sputtering chamber 200 easily removed so the chamber can be converted from the illustrated configuration to a more conventionally operated chamber coating only one side of the glass and having rollers spaced more closely together.

Instead of changing the spacing between the rollers, the rollers could instead be made smaller in diameter. Conventional rollers are hollow metal tubes. If so desired, the smaller diameter rollers can be stiffened, e.g., by filling them with a rigid foam. In order to maintain the same transport speed of the glass along the support, these smaller-diameter rollers would have to be turned more rapidly, e.g., by means of a pair of gears having the desired gear ratio.

The rollers 210 can be of any conventional structure. It has been found that good results can be obtained by employing cylindrical aluminum rollers about which a rope of Kevlar™ is spirally wound, with the Kevlar™ providing the surface with which the glass is in direct contact.

In some specific applications, the dual direction sputtering chamber 200 of Figure 4 may be sufficient to apply the entire desired coating to both the interior and exterior surfaces of the glass. More often, though, the sputtering chamber 200 would be part of a sputtering line comprising a series of sputtering chambers. Each sputtering chamber in the line could include both an upper target and a lower target, but in most conventional applications the film stack applied to the upper surface of the glass will be more complex (i.e. will comprise a series of distinct layers of varying composition) and thicker than is the water-sheeting coating of the invention. As a consequence, a majority of the sputtering chambers can comprise conventional, downward sputtering chambers having only an upper target, with no target positioned beneath the supports.

If the sputtering line comprises a combination of downward sputtering chambers and dual direction sputtering chambers 200, the position of the dual direction chambers along the sputtering line can be varied. If the water-sheeting coating of the invention is applied by sputtering a graphite in a nitrogen atmosphere, for example one should not attempt to deposit metal oxide layer from a metal target on the upper surface of the glass in the s ame c hamber. Accordingly, at least those chambers used to sputter a metal oxide layer may be operated as a downward sputtering chamber by omitting the lower target. It would be possible, though, to deposit a metal nitride (e.g., Si₃N₄, TiN, or a combination of Si₃N₄ and SiC) on the upper surface of the glass in the same chamber.

Conventional wisdom would suggest to one skilled in the art that the water-sheeting coating of the invention be applied in the first sputtering chamber or, if necessary, the first several sputtering chambers to make sure that the water-sheeting coating is applied before the glass surface is damaged or soiled by contact with the rollers supporting the glass within the chambers. Quite surprisingly, it has been found that the opposite is true - the water-sheeting coating of the invention is optimally applied in the last sputtering chamber. If more than one dual direction sputtering chamber 200 is necessary to deposit a sufficiently thick water-sheeting coating without unduly slowing down glass speed through the sputtering line, the water-sheeting coating is optimally applied in the last few sputtering chambers.

If the water-sheeting coating of the invention is applied at the beginning of the sputtering line, the majority of the exterior surface of the glass will exhibit the desired water-sheeting properties. However, the margins of the glass may not exhibit these improved properties on a consistent basis. This is believed to be due to a slight overspray of the coating applied to the upper surface of the glass after deposition of the water-sheeting coating, wherein a very small amount of the material being applied to the upper surface will drift down to the lower surface and overlie the water-sheeting coating adjacent the edges of the glass sheet. While this oversprayed coating is thin enough as to have no readily discernable effect on the optical properties of the glass, this virtually invisible coating compromised the benefits of the water-sheeting coating around the edges of the glass. By applying the carbon to the exterior surface of the glass toward the end of the sputtering line, the amount of overspray deposited on top of the carbon coating can be minimized and the beneficial water-sheeting effects of this coating can be preserved.

A dual direction sputtering chamber 200 such as that shown in Figure 4 is believed to minimize the cost and maximize production efficiency in applying coatings to both sides of the sheet of glass. Less desirably, a water-sheeting coating of the invention could be applied in one pass while the reflective coating is applied to the other side of the glass in a second pass, flipping the glass between the passes to permit all of the targets to be positioned on the same side of the supports in the chamber(s). This is much less efficient than the process outlined above, though, and is not believed to be suitable for low-cost commercial glass production.

As the glass substrate moves through the chamber, there will be times when the glass does not effectively shield the upper targets 200a and 200b from the lower target 260 or vice versa. As a consequence, material from the upper targets will be deposited on the lower target and material from the lower target can be deposited on one or both of the upper targets. While the sputtering chamber 200 of Figure 4 is ideally suited to sputtering with the upper targets 220a, 220b and the lower target 260 have substantially the same composition, this is not necessary. If the upper targets have a different composition from the lower target, care may need to be taken to minimize cross-contamination of the different targets.

At least in theory, this problem may be overcome by independently controlling the power supplied to each of the sputtering targets to ensure that each target is sputtering only when the glass is positioned to shield the upper and lower targets from one another. Current commercially available power supply controllers are not configured in this fashion, however. Furthermore, the control logic for such an arrangement can be unduly difficult if the sputtering line is used to coat glass substrates of varying sizes rather than a consistent size.

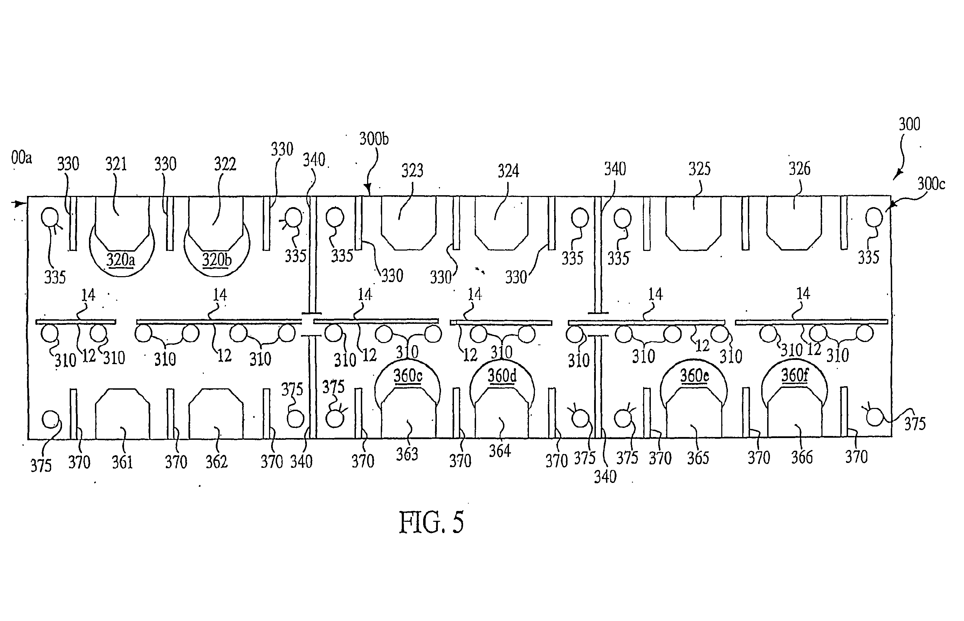

Figure 5 illustrates one possible sputtering chamber 300 which can be used to coat both the interior surface 14 and the exterior surface 12 of the substrate in a single pass without significant cross contamination of the sputtering targets. Elements serving an analogous function to elements shown in Figure 4 bear like reference numbers, but indexed by 100, e.g., the upper gas distribution pipes 335 of Figure 5 are functionally analogous to the upper gas distribution pipes 235 of Figure 4.

The sputtering chamber 300 of Figure 5 is effectively divided into three coating zones 300a, 300b and 300c by a pair of barriers 340. Some fraction of the gas in one coating zone may flow into another coating zone, so it is best to use a similar atmosphere in all three zones. However, the barriers 340 serve to effectively limit the amount of material sputtered in one coating zone which lands on a target in another coating zone.

In the embodiment of Figure 5, each of the three coating zones 300a-300c is adapted to hold up to four targets, with two targets positioned above the substrate and two positioned below the substrate. Hence, there are six upper target mounts 321-326 positioned above the path of the glass and six lower target mounts 3 61-366 positioned beneath the path of the glass. This allows maximum flexibility in using this single multizone sputtering chamber 300 to manufacture products having different properties. Figure 5 schematically illustrates each of the upper target mounts 321-326 vertically aligned with one of the lower target mounts 361-366, respectively. It should be understood, however, that the targets need not be vertically aligned in this fashion and may be more advantageously positioned in a horizontally staggered arrangement.

In the configuration shown in Figure 5, the first coating zone 300a has two upper targets (320a and 320b), but no lower targets on the lower target mounts 361 or 362. While a sputtering gas should be supplied to the upper gas distribution pipes 335 and power should be supplied to the upper anodes 330 in the first coating zone, there is no need to deliver any gas to the lower gas distribution pipes 375 or any power to the lower anodes 370. The second coating zone 300b has two lower targets 3 60c and 3 60d, but neither of the upper target mounts 323 and 324 carry sputtering targets. Similarly, the third coating zone 300c has two lower targets 360e and 360f, but neither of the upper target mounts 325 and 326 carry sputtering targets. Optimally (as discussed above), the first coating zone 300a is used to apply the outermost layer of the reflective film stack carried by the interior surface 14 of the substrates while the last two coating zones 300b and 300c are used to sputter the water-sheeting coating 20 on the exterior surface 12 of the substrates.

The arrangement of targets in the multiple-zone sputtering chamber 300 of Figure 5 is merely illustrative and it should be understood that the target arrangement can be varied to maximize production efficiency for different products. For example, if a thicker water-sheeting coating is desired at the same glass speed, a graphite target or the like can be mounted on each of the lower target mounts 361-366 while none of the upper target mounts 321-326 carry a target. If a thinner coating will suffice (or if glass speed through the coating chamber is suitably reduced), only the last two lower target mounts 325 and 326 can be provided with targets while each of the first four upper target mounts 321-324 carry sputtering targets. Of course, any one or more of the coating zones 300a-300c can be operated much like the dual-direction sputtering chamber 200 of Figure 4 by mounting targets in the upper and lower target mounts of the same zone.

The apparatus of Figures 4 and 5 and the method of depositing coatings using such coating systems is discussed in the present application primarily in the context of applying a reflective film stack on one side of the glass and a water-sheeting coating on the other side of the glass. It is to be understood, however, that this apparatus and method can be used to apply coatings to both sides of a pane of glass regardless of the nature of the coatings applied thereto. For example, the apparatus can be used to apply an anti-reflective coating on both sides of a pane of glass, to apply infrared reflective coatings to both sides of a transparent or translucent organic substrate, or to apply a water-sheeting coating to each side of the same substrate.

The advantage of the systems illustrated in Figures 4 and 5 is that a substrate can be provided with a sputtered coating (regardless of composition) on both sides in a single pass through the coating apparatus while the glass is maintained in a constant orientation, i.e. wherein it does not need to be flipped, turned or otherwise manipulated. This enables the use of a simple set of standard transport rollers to move the glass along the production line. In the absence of the present invention, one typically would have to either manually handle the glass to flip it and send it back through the coating apparatus in a separate run, or use a complex glass handling system which must hold the substrate and flip it at some point during the production process. This enables glass having coatings on both sides to be produced particularly economically without any loss in coating quality.

In the past, it was assumed that even if one were to coat the bottom side of the glass, contact with the rollers would mar that coating or and/or damage the bottom surface of the glass prior to application of the coating. Surprisingly, however, the present invention demonstrates that both sides of the glass can be coated in a single pass with excellent results.

The precise operating conditions (e.g. target composition, plasma composition, etc.) under which the water-sheeting coating of the invention is applied can be varied as necessary to optimize the deposition of a coating of the desired thickness. Given the present teaching as a guide, one of ordinary skill in the art should be able to select suitable operating conditions to apply a coating of the invention without undue experimentation.

In manufacturing float glass, molten glass is floated on a bath of molten tin and the glass is referred to as having an upper side and a lower, or "tin" side. Most commonly, when float glass is provided with a reflective coating, the coating is applied to the upper side of the glass due to some minor surface imperfections in the tin side of the glass which can arise due to contact with support rollers in the annealing lehr. If a sheet of float glass 10 is to be provided with both a water-sheeting coating 20 and a reflective layer 30, it is preferred that the upper surface of the sheet glass be used as the interior surface 14 of the glass to receive the reflective coating 30 while the tin side of the glass is used as the exterior surface to receive the water-sheeting coating 20.

The behavior of a sheet of glass coated with a water-sheeting coating of the invention is visibly different from that of a similar sheet of glass not bearing the present coating. A glass surface bearing a water-sheeting coating 20 tends to sheet water more readily and is noticeably easier to clean without any visible streaks or defects than is a comparable sheet of uncoated glass under the same conditions.

A conventional cleaning solution commercially available under the trademark Windex^{®} was sprayed on the surface of the glass pane bearing the coating 20 and the surface was wiped with a paper towel until the area appeared dry. The same process was repeated on a plain, uncoated sheet of float glass of the same composition and it was determined that the water-sheeting coating 20 of the invention appeared dry and streak-free in less time and with less effort than did the standard float glass. While such visible streaks may eventually dry without leaving any substantial residual streaking on the glass, it is believed that the average person would tend to continue to wipe the glass surface until all visible streaks disappeared, meaning that the person would expend less time and effort cleaning a glass article b earing a w ater-sheeting coating 20 than a glass article without such a coating.

The change in surface properties brought about by the present invention are readily discernable on a qualitative level, but it can be more difficult to quantify these differences in a meaningful manner. Nonetheless, the following examples are believed to illustrate the difference between an uncoated sheet of glass and a sheet of glass bearing a water-sheeting coating 20 of the invention.

### Experimental Example 1

Five similar sheets of soda-lime glass were provided. Two of the samples (Sample A1 and Sample A2) were coated with a carbon coating 20 of the invention and an argon atmosphere. Two of the samples (Sample B1 and Sample B2) were coated with a similar coating applied in a nitrogen atmosphere. The fifth sample (Sample C) was left uncoated.

All of the carbon coatings were applied on a standard, commercial sputtering line using a rotary target having a metal core over which had been sprayed a particulate graphite layer. Sample A1 was coated using a power level of about 15.5 kW at 485 V in an argon atmosphere maintained at about 4.0 mT and a flow rate of about 627 sccm, with the glass moving at a rate of about 8.89 m/min (350 inches per minute) Sample A2 was coated using a power level of about 15.7 kW at 513 V in an argon atmosphere maintained at about 4.0 mT and a flow rate of 616 sccm, with the glass moving at a rate of about 12.7 m/min (500 inches per minute) The third sample, Sample B1, was created using a power level of about 15 kW at 576 V in a nitrogen atmosphere of about 4.0 mT and a flow rate of about 1204 sccm, with the glass moving at a rate of about 8.89 m/min (350 inches per minute). Finally, Sample B2 was applied using a power level of about 15.3 kW at 603 V in a nitrogen atmosphere of about 4.0 mT and a flow rate of 1187 sccm, with the glass moving at a rate of about 12.7 m/min (500 inches per minute).

The contact angle of water on the coated side of the glass was then measured using a standard commercial device for measuring such contact angles. The results of these measurements are shown in Table 1. Each of the samples were placed in a Singleton Model SL23 humidity test chamber maintained at 90% relative humidity at about 120 °F (about 49°C) for about 15 days. Each sample was then removed from the test chamber, sprayed with tap water and allowed to dry. Thereafter, the dried samples were visually inspected to determine the cleanliness of the surface on a scale of 1 to 5, with 1 being the cleanest and 5 being the dirtiest. These dirty glass surfaces were then sprayed with Windex® and wiped with a KimWipe™ paper towel. During this cleaning process, subjective determinations of ease of cleaning and the ease of wiping were made, with a similar 5-point ranking scale being used, with 1 being the easiest and 5 being the hardest on both scales. The cleanliness, ease of cleaning and ease of wiping data are also shown in Table 1.

**TABLE 1**

| Sample | Contact Angle | Cleanliness | Ease of Cleaning | Ease of Wiping |
|---|---|---|---|---|
| A1 | 43° | 4 | 3 | 3 |
| A2 | 43° | 4 | 3-4 | 3 |
| B1 | 17° | 3 | 2 | 2 |
| B2 | 24° | 4 | 3 | 2 |
| C | | 4 | 3 | 3 |

These results indicate that the coated samples of the invention were at least as good as the uncoated glass. Perhaps surprisingly, the gas in the plasma used in applying the coating 20 had a significant impact on the properties of the glass. In particular, the two samples employing a carbon coating applied in a nitrogen atmosphere (B 1 and B2) had a significantly lower contact angle than the samples bearing coatings sputtered using argon. Sample B1 also showed some improvement over the plain, uncoated glass in cleanliness, ease of cleaning and ease of wiping. Hence, this coating should stay clean longer than uncoated glass when exposed to the same ambient environment and should be noticeably easier to clean when it does become dirty.

### EXPERIMENTAL EXAMPLE 2

Similar samples were also subjected to weathering testing using a Q Panel Model QUV tester, which is used to simulate the deterioration caused by water as rain or dew and prolonged exposure to ultraviolet energy in sunlight. For a period of about 7 days, the samples were exposed a cycle of four hours of exposure to an ultraviolet light source at about 60°C followed by four hours of condensation at 50°C (i.e., the relative humidity in the chamber was sufficiently high to cause water to condense on the glass surface at that temperature). The same ratings of cleanliness, ease of cleaning and ease of wiping were made, with results determined as follows:

**TABLE 2**

| Sample | Cleanliness | Ease of Cleaning | Ease of Wiping |
|---|---|---|---|
| A1 | 3 | 1 | 4 |
| A2 | 3 | 1 | 4 |
| B1 | 2 | 1 | 3 |
| B2 | 2 | 1 | 3 |
| C | 4 | 3 | 3 |

This data shows an even more marked improvement. Each of the samples bearing a coating 20 of the invention remained cleaner than the uncoated glass and were much easier to clean. The only negative was that the samples coated in an argon atmosphere were more difficult to wipe than the other samples. Again, it appears that the samples bearing a water-sheeting coating sputtered in nitrogen yielded more favorable results than coatings applied in an argon atmosphere.

### EXPERIMENTAL EXAMPLE 3

The ease with which glass surfaces could be cleaned was compared using a somewhat more rigorous set of soiling agents. In particular, a glass surface bearing a water-sheeting coating 20 and an uncoated glass surface were each soiled with tap water, dirty water, rain water, ChapStik (a lip balm which leaves a waxy residue) and fingerprints from unwashed hands. Nonetheless, the overall ease of cleaning for the uncoated glass sample was rated as a 4 on the same 5-point scale used above, while the overall ease of cleaning the carbon-coated surface of the invention was rated a vastly superior 2 on the same scale.

## Claims

1. A coated glass article having an exterior face exposed to periodic contact with water and an inner face, the exterior face bearing an external water-sheeting coating thereon, the coating being formed of a graphite carbon layer having a thickness of 50-100 angstroms, the coating being sputtered directly onto the exterior face of the article, or being formed onto a transparent base layer applied directly onto the exterior face of the article, the coating reducing the contact angle of water on the coated exterior face to below about 25 degrees and causing water applied to the coated exterior to sheet.

2. The coated glass article of claim 1, wherein the thickness of the carbon layer is 15-40 angstroms.

3. The coated glass article of claim 1 or claim 2, wherein the water-sheeting coating comprises a non-hydrogenated carbon.

4. The coated glass article of any one of the preceding claims, further comprising a reflective coating carried on the inner face, the reflective coating comprising a metal layer carried between said inner face and a dielectric layer.

5. The coated glass article of claim 4, wherein the reflective coating is an infrared reflective coating including an inner dielectric layer between the metal layer and the inner face.

6. The coated glass article of any one of the preceding claims, including a transparent base layer having a refractive index that is substantially the same as the substrate.

7. The coated glass article of claim 6, wherein the transparent base layer has a refractive index that is less than about 1.7, preferably between 1.35 and 1.65, and most preferably between 1.4 and 1.55.

8. The coated glass article of any one of the preceding claims including a transparent base layer of silicon dioxide.

9. The coated glass article of any one of the preceding claims, having a transparent base layer with a thickness of less than about 100 angstroms, preferably about 25-100 angstroms, and more preferably about 50-70 angstroms.

## Patentansprüche

1. Beschichteter Gegenstand aus Glas mit einer Außenfläche, die periodisch der Berührung mit Wasser ausgesetzt ist, und einer Innenfläche, wobei die Außenfläche einen äußeren, Wasser zu einer zusammenhängenden Masse formenden Überzug trägt, der aus einer Graphitschicht von einer Dicke von 50-100 Å gebildet und entweder unmittelbar auf die Außenfläche des Gegenstandes durch Sputtering aufgebracht oder auf einer durchsichtigen Grundschicht ausgebildet wird, die unmittelbar auf die Außenfläche des Gegenstands aufgebracht wird, wobei der Überzug den Kontaktwinkel des Wassers auf der beschichteten Außenfläche auf unter 25 Grad verringert und veranlaßt, daß Wasser, welches auf die beschichtete Außenfläche aufgebracht wird, zusammenläuft.

2. Beschichteter Gegenstand aus Glas gemäß Anspruch 1, wobei die Stärke der Kohlenstoffschicht 15-40 Å beträgt.

3. Beschichteter Gegenstand aus Glas gemäß Anspruch 1 oder 2, wobei der Wasser zu einer zusammenhängenden Masse formende Überzug nichthydrierten Kohlenstoff enthält.

4. Beschichteter Gegenstand aus Glas gemäß einem der vorhergehenden Ansprüche, der außerdem eine reflektierende Beschichtung auf der Innenfläche aufweist, die eine Metallschicht enthält, welche zwischen der Innenfläche und einer dielektrischen Schicht angeordnet ist.

5. Beschichteter Gegenstand aus Glas gemäß Anspruch 4, wobei die reflektierende Beschichtung eine Infrarotlicht reflektierende Beschichtung ist, die eine innere dielektrische Schicht zwischen der Metallschicht und der Innenfläche aufweist.

6. Beschichteter Gegenstand aus Glas gemäß einem der vorhergehenden Ansprüche, der eine durchsichtige Grundschicht aufweist, die einen Brechungsindex besitzt, der im wesentlichen dem des Substrats gleich ist.

7. Beschichteter Gegenstand aus Glas gemäß Anspruch 6, wobei die durchsichtige Grundschicht einen Brechungsindex aufweist, der unter etwa 1,7, vorzugsweise zwischen 1,35 und 1,65 und insbesondere zwischen 1,4 und 1,55 liegt.

8. Beschichteter Gegenstand aus Glas gemäß einem der vorhergehenden Ansprüche, der eine durchsichtige Grundschicht aus Siliciumdioxid aufweist.

9. Beschichteter Gegenstand aus Glas gemäß einem der vorhergehenden Ansprüche, der eine durchsichtige Grundschicht von einer Stärke von unter etwa 100 Å, vorzugsweise von etwa 25-100 Å und insbesondere von etwa 50-70 Å aufweist.

## Revendications

1. Article de verre revêtu ayant une face supérieure exposée à un contact périodique avec de l'eau et une face interne, la face extérieure portant un revêtement formant nappe d'eau externe, le revêtement étant composé d'une couche de carbone graphite ayant une épaisseur de 50 à 100 angströms, le revêtement étant pulvérisé directement sur la face extérieure de l'article, ou étant formé sur une couche de base transparente appliquée directement sur la face extérieure de l'article, le revêtement réduisant l'angle de contact de l'eau sur la face extérieure revêtue jusqu'à moins d'environ 25 degrés et amenant l'eau appliquée vers l'extérieur revêtu à former une nappe.

2. Article de verre revêtu selon la revendication 1, dans lequel l'épaisseur de la couche de carbone est comprise entre 15 et 40 angströms.

3. Article de verre revêtu selon la revendication 1 ou la revendication 2, dans lequel le revêtement formant nappe d'eau comprend un carbone non hydrogéné.

4. Article de verre revêtu selon l'une quelconque des revendications précédentes, comprenant en outre un revêtement réflecteur supporté sur la face interne, le revêtement réflecteur comprenant une couche de métal supportée entre ladite face interne et une couche diélectrique.

5. Article de verre revêtu selon la revendication 4, dans lequel le revêtement réflecteur est un revêtement réflecteur d'infrarouges comportant une couche diélectrique interne entre la couche métallique et la face interne.

6. Article de verre revêtu selon l'une quelconque des revendications précédentes, comportant une couche de base transparente ayant un indice de réfraction sensiblement identique à celui du substrat.

7. Article de verre revêtu selon la revendication 6, dans lequel la couche de base transparente possède un indice de réfraction inférieur à environ 1,7, de préférence compris entre 1,35 et 1,65 et de préférence encore entre 1,4 et 1,55.

8. Article de verre revêtu selon l'une quelconque des revendications précédentes, comportant une couche de base transparente de dioxyde de silicium.

9. Article de verre revêtu selon l'une quelconque des revendications précédentes, ayant une couche de base transparente présentant une épaisseur inférieure à environ 100 angströms, de préférence comprise entre environ 25 et 100 angströms, et de préférence encore comprise entre environ 50 et 70 angströms.
